Europäisches Patentamt

European Patent Office

Office européen des brevets

(11) Numéro de publication: **0 265 296 B1**

# FASCICULE DE BREVET EUROPEEN

(45) Date de publication de fascicule du brevet:
20.03.91

(51) Int. Cl.5 **B60C 23/00**

(21) Numéro de dépôt: 87401970.6

(22) Date de dépôt: 02.09.87

(54) Circuit de passage d'air pour un dispositif de gonflage automatique d'une roue de véhicule.

(30) Priorité: 30.09.86 FR 8613579

(43) Date de publication de la demande:
27.04.88 Bulletin 88/17

(45) Mention de la délivrance du brevet:
20.03.91 Bulletin 91/12

(84) Etats contractants désignés:
DE GB IT

(56) Documents cités:
FR-A- 1 048 687
FR-A- 1 247 604
FR-A- 2 265 560

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Lescaut, Emmanuel**
**18, rue des Cols Verts**
**F-78340 Les Clayes Sous Bois(FR)**

(74) Mandataire: **Moncheny, Michel et al**
**c/o Cabinet Lavoix 2 Place d'Estienne d'Or-**
**ves**
**F-75441 Paris Cedex 09(FR)**

Rank Xerox (UK) Business Services

## Description

La présente invention a pour objet un circuit de passage d'air pour un dispositif de gonflage automatique d'une roue de véhicule.

Comme on le sait, le gonflage automatique d'un pneumatique équipant une roue d'un véhicule s'effectue à travers le support de roue et la roue elle-même, l'air comprimé passant par un joint tournant agencé entre la roue et le support et par un clapet anti-retour solidaire de la roue.

L'invention est donc applicable aux véhicules automobiles équipés d'un dispositif de gonflage automatique comportant une source d'air comprimé et un système de régulation relié à des capteurs de pression associés chacun à l'une des roues du véhicule.

Dans les circuits de passage d'air connus (Voir par exemple FR-A-1048687 correspondant au préamble de la revendication 1), le clapet anti-retour est fixé à la roue à l'extérieur de celle-ci, ainsi qu'un conduit le reliant au pneumatique. Il en résulte un mauvais aspect de la roue, ou une difficulté de cacher lesdits clapet et conduit. De plus, ceux-ci sont vulnérables, notamment lors du démontage de la roue, et risquent de présenter une étanchéité imparfaite, cause de dégonflage du pneumatique et/ou de déclenchement fréquent du gonflage automatique si le véhicule est équipé d'un système de régulation automatique de la pression des pneumatiques.

L'invention a donc pour but de réaliser, par des moyens simples et fiables, pour un dispositif de gonflage d'un pneumatique à partir d'une source d'air comprimé portée par le véhicule, un circuit de passage d'air reliant au pneumatique une partie fixe du véhicule.

Le circuit de passage d'air visé par l'invention, entre un pneumatique d'une roue de véhicule au moins partiellement moulée et un conduit amont agencé dans une première pièce annulaire solidaire du support de la roue, comprend un clapet anti-retour porté par la roue et relié d'une part, au pneumatique par un conduit aval au moins partiellement intégré dans la roue, d'autre part au conduit amont par un passage intermédiaire auquel est associé un joint tournant.

Suivant l'invention, le clapet est noyé dans la roue.

Selon l'invention le terme "roue" ne s'étend pas au pneumatique.

Suivant d'autres particularités avantageuses:

- le conduit aval est un tuyau métallique inséré dans la roue lors de son moulage;
- le clapet est logé dans un boîtier métallique inséré dans la roue lors de son moulage;
- une partie du passage intermédiaire est aménagée dans un toc d'entraînement de la roue, engagé dans un trou borgne de la roue, au fond duquel est logé le clapet;

- la roue étant portée par le support au moyen d'un roulement, le conduit amont est agencé dans la première pièce annulaire interposée entre une bague du roulement fixée au support et une deuxième pièce annulaire fixée à la roue et contenant la partie du passage intermédiaire, et le joint tournant sépare les deux pièces annulaires;

- le joint tournant est constitué de chicanes annulaires s'imbriquant entre elles.

L'invention sera maintenant décrite en référence aux dessins annexés, qui en illustrent deux modes de réalisation à titre d'exemples non limitatifs:

- la Figure 1 est une vue en coupe axiale verticale d'un premier mode de réalisation du circuit de passage d'air entre un pneumatique et une roue de véhicule selon l'invention;

- la Figure 2 est une vue analogue à la Figure 1 d'un second mode de réalisation du circuit de passage d'air selon l'invention.

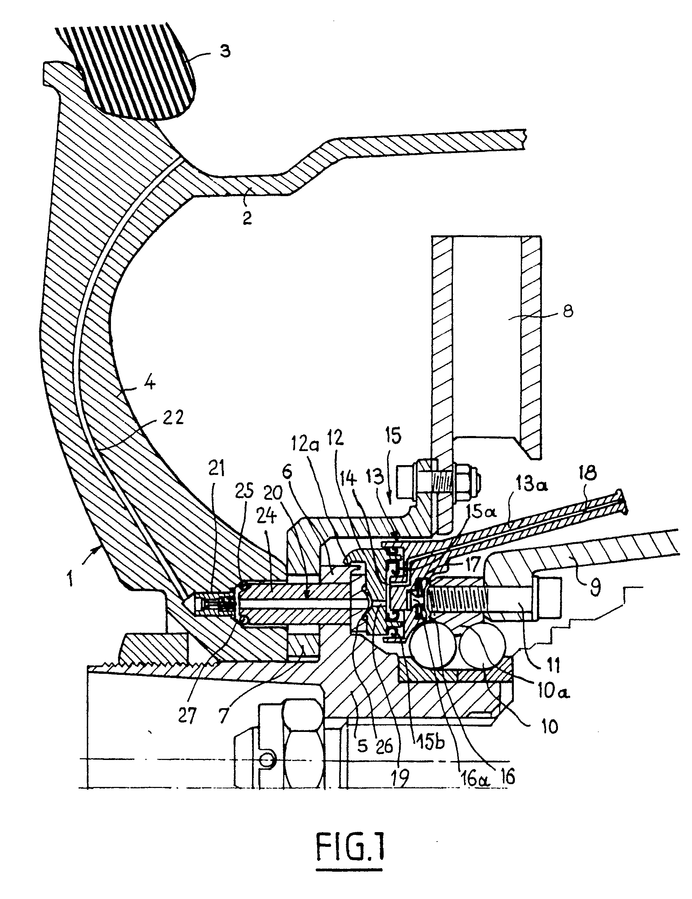

On voit à la Figure 1 une roue 1 de véhicule automobile, réalisée par moulage d'une matière telle qu'un alliage léger métallique, qui comporte une jante 2 équipée d'un pneumatique 3 sans chambre à air et un voile 4 fixé sur un moyeu 5. Entre une collerette 6 de celui-ci et le voile 4 est enserré un plateau 7 auquel est fixé un disque de frein 8. La roue 1, le moyeu 5 et le disque 8 sont portés par un support de roue 9 au moyen d'un roulement 10 dont la bague extérieure 10a est fixée au support 9 par des vis 11.

Entre la collerette 6 et la bague 10a du roulement 10 sont interposées deux pièces annulaires 12, 13 séparées axialement par une mince chambre annulaire 14 délimitée radialement par un double joint tournant 15. Ces pièces annulaires 12, 13 sont de préférence réalisées en matière plastique rigide. La deuxième pièce 12 est fixée à la collerette 6 par emmanchement ou accrochage sur le pourtour de celle-ci d'un rebord périphérique 12a, et la première pièce 13 est solidaire en rotation du support 9 par coopération d'au moins l'une des vis 11 avec une coupelle 16 engagée dans un logement où sont enfermées deux rondelles élastiques 17 d'appui de la coupelle 16. Celle-ci est maintenue dans le logement par accrochage élastique d'un ergot central 16a dont elle est solidaire dans le fond du logement. Cet aménagement permet d'utiliser le même roulement 10, 10a que ceux équipant les véhicules non munis du dispositif décrit.

Dans la pièce annulaire 13, et notamment dans un embout tubulaire 13a de celle-ci, est agencé un conduit 18, dit conduit amont, reliant la chambre 14 à l'extrémité de l'embout 13a, propre à être raccordé à une canalisation d'un dispositif de gonflage équipant le véhicule et comportant, de façon connue non représentée, une source d'air comprimé et des électrovannes de régulation commandées en fonction de la pression d'air captée à chaque pneumatique du véhicule.

Dans la pièce 12, est percé un trou 19 qui relie la chambre 14 à un passage 20 ménagé au travers de la collerette 6 et du plateau 7 et aboutissant à un clapet anti-retour 21 noyé dans le voile 4. Ce clapet 21 communique, du côté opposé au passage 20, avec un conduit 22, dit conduit aval, noyé dans le voile 4 et débouchant au niveau de la jante 2 dans l'enceinte du pneumatique 3. Ce conduit 22 est constitué d'un tuyau métallique inséré dans la roue lors de son moulage. En variante, il vient de moulage au moyen d'un noyau extractible ou destructible, à cire perdue par exemple. Le clapet 21 peut être une valve usuelle (Figure 1) à tige axiale tirée par un ressort l'entourant.

Le passage intermédiaire 20 est avantageusement constitué par un trou axial percé dans un toc 24 d'entraînement de la roue (Figure 1) engagé dans un trou borgne 27 du voile 4. Au fond de ce trou 27 est emmanché le clapet 21. Dans le cas où une bonne étanchéité est souhaitée, celle-ci est assurée par des joints toriques 25, 26 aux deux extrémités du toc 24 et par des joints tournants à lèvre 15a, 15b.

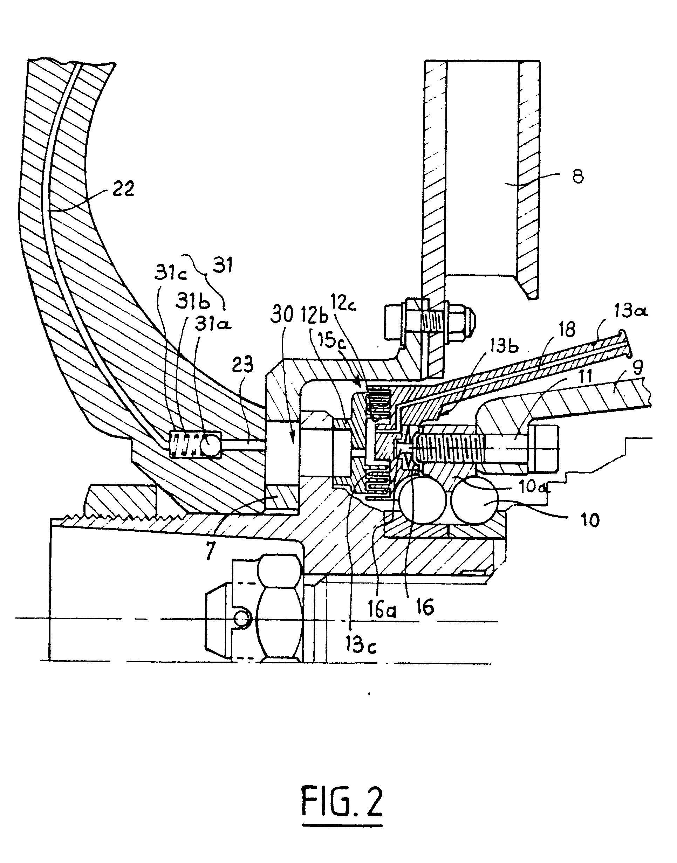

Dans le mode de réalisation de la Figure 2, le clapet 31 comporte une bille 31a poussée par un ressort 31b. Il est par exemple contenu dans un boîtier métallique 31c inséré dans la roue 1 lors de son moulage, en même temps que le conduit aval 22 et qu'un conduit 23 percé dans le voile 4 et prolongeant un passage intermédiaire 30 ménagé dans le plateau 7 et dans la deuxième pièce 12b.

Les pièces annulaires 12, 13 de la réalisation sont ici remplacées par des pièces annulaires 12b, 13b pourvues à leur jonction de chicanes annulaires 12c, 13c respectivement, alternativement solidaires desdites pièces 12b, 13b, et constituant un joint tournant 15c. Une étanchéité moins rigoureuse est donc ici assurée, avec absence de tout joint souple vulnérable.

Lors du gonflage par l'embout 13a, une légère fuite d'air se produit par ce joint 15c, ce qui est sans importance si le captage de la pression dans le pneumatique 3 s'effectue au droit de celui-ci et non en amont du clapet 31.

Dans une variante non représentée, la roue étant métallique et le voile étant recouvert d'une partie visible surmoulée en matière organique, le clapet 21, 31 est inséré dans cette partie surmoulée ainsi qu'au moins le conduit aval 22.

Dans tous les cas, le clapet 21, 31 et le conduit aval 22 étant noyés dans la roue 1, l'étanchéité est assurée rigoureusement entre le clapet et le pneumatique 3, ce qui évite tout dégonflement intempestif de ce dernier notamment lors du démontage de la roue.

## Revendications

1. Circuit de passage d'air entre un pneumatique (3) d'une roue (1) de véhicule au moins partiellement moulée et un conduit amont (18) agencé dans une poremière pièce annulaire (13, 13b) solidaire du support (9) de la roue, comprenant un clapet anti-retour (21, 31) porté par la roue (1) et relié d'une part, au pneumatique (3) par un conduit aval (22), au moins partiellement intégré dans la roue, d'autre part au conduit amont (18) par un passage intermédiaire (20, 30) auquel est associé un joint tournant (15, 15c), caractérisé en ce que le clapet (21, 31) est noyé dans la roue (1).

2. Circuit selon la revendication 1, caractérisé en ce que le conduit aval (22) est un tuyau métallique inséré dans la roue (1) lors de son moulage.

3. Circuit selon l'une des revendications 1 et 2, caractérisé en ce que le clapet (31) est logé dans un boîtier métallique (31c) inséré dans la roue (1) lors de son moulage.

4. Circuit selon l'une des revendications 1 à 3, caractérisé en ce qu'une partie du passage intermédiaire (20) est aménagée dans un toc (24) d'entraînement de la roue (1), engagé dans un trou borgne de la roue, au fond duquel est logé le clapet (21).

5. Circuit selon l'une des revendications 1 a 4, caractérisé en ce que, la roue (1) étant portée par le support (9) au moyen d'un roulement (10), la première pièce annulaire (13, 13b) est interposée entre une bague (10a) du roulement (10) fixée au support (9) et une deuxième pièce annulaire (12, 12b) fixée à la roue et contenant la partie du passage intermédiaire (20, 30), et le joint tournant (15, 15c) sépare les deux pièces annulaires (12, 13; 12b, 13b).

6. Circuit selon la revendication 5, caractérisé en ce que le joint tournant (15c) est constitué de chicanes annulaires (12c, 13c) s'imbriquant entre elles.

## Claims

1. A circuit for the passing of air between a tyre (3) of an at least partly moulded wheel (1) of a vehicle and an up-line conduit (18) arranged in a first annular component (13, 13b) fixed to the support (9) for the wheel, comprising a non-return valve (21, 31) carried by the wheel (1) and connected, on the one hand, to the tyre (3) by a down-line conduit (22) that is at least partly integrated into the wheel and on the other hand, to the up-line conduit (18) via an intermediate duct (20, 30) wherewith there is associated a rotary seal (15, 15c), characterized in that the valve (21, 31) is embedded in the wheel (1).

2. A circuit according to claim 1, characterized in that the down-line conduit (22) is a metallic tube inserted into the wheel (1) when it is moulded.

3. A circuit according to one of claims 1 and 2, characterized in that the valve (31) is accommodated in a metallic casing (31c) inserted into the wheel (1) when it is moulded.

4. A circuit according to one of claims 1 to 3, characterized in that a portion of the intermediate duct (20) is arranged in a dog (24) for the entrainment of the wheel (1), engaged in a blind hole of the wheel, the valve (21) being arranged at the bottom thereof.

5. A circuit according to one of claims 1 to 4, characterized in that, since the wheel (1) is carried by the support (9) by means of a bearing (10), the first annular component (13, 13b) is interposed between a race (10a) of the bearing (10) fixed to the support (9) and a second annular component (12, 12b) fixed to the wheel and containing the portion of the intermediate duct (20, 30), and in that the rotary seal (15, 15c) separates the two annular components (12, 13; 12b, 13b).

6. A circuit according to claim 5, characterized in that the rotary seal (15) is constituted by annular baffles (12c, 13c) interleaved with each other.

**Ansprüche**

1. Luftkreislauf zwischen einem Reifen (3) eines mindestens teilweise gegossenen Fahrzeugrades (1) und einer oberen Druck-Leitung (18), die in einem ersten ringförmigen, mit dem Träger (9) des Rades verbunden Teil (13, l3b) angeordnet ist, mit einem vom Rad (1) getragenen Rückschlagventil (21, 31), das an der einen Seite durch eine mindestens teilweise in das Rad eingebaute untere Druck-Leitung (22) mit dem Reifen (3) und an der anderen Seite durch einen mit einem Dichtungselement (15, 15c) verbundenen Zwischendurchgang (20, 30) mit der oberen Druckleitung (18) verbunden ist, dadurch gekennzeichnet, daß
das Rückschlagventil (21, 31) in das Rad (1) eingebettet ist.

2. Kreislauf nach Anspruch 1,
dadurch gekennzeichnet, daß
die untere Druckleitung (22) ein Metallrohr ist, welches in das Rad (1) eingegossen ist.

3. Kreislauf nach Anspruch 1 und 2,
dadurch gekennzeichnet, daß
das Rückschlagventil (31) in einem Metallgehäuse (31c) angeordnet ist, welches in das Rad eingegossen ist.

4. Kreislauf nach einem der Ansprüche 1 bis 3,
dadurch gekennzeichnet, daß
sich ein Teil des Zwischendurchgangs (20) in einer Hülse (24) des Rades (1) befindet, welche in einem Sackloch des Rades angeordnet ist, an dessen inneren Ende das Rückschlagventil (21) vorgesehen ist.

5. Kreislauf nach einem der Ansprüche 1 bis 4,
dadurch gekennzeichnet, daß
das Rad (1) auf dem Träger (9) durch ein Wälzlager (10) gelagert ist, daß das erste ringförmige Teil (13, 13b) zwischen einem auf dem Träger (9) befestigten Lagerring (10a) und einem zweiten ringförmigen Teil (12, 12b), welches auf dem Rad befestigt ist und einen Teil des Zwischendurchgangs (20, 30) umfaßt, angeordnet ist und daß das Dichtungselement (15, 15c) die beiden ringförmigen Teile (12, 13; 12b, 13b) voneinander abtrennt.

6. Kreislauf nach Anspruch 5,

dadurch gekennzeichnet, daß
das Dichtungselement (15c) aus lamellenförmig ineinandergreifenden Scheiben (12c, 13c) besteht.

FIG.1

FIG.2